# EUROPÄISCHE PATENTSCHRIFT

(11) **EP 1 874 159 B1**
(45) Veröffentlichungstag und Bekanntmachung des Hinweises auf die Patenterteilung: **01.11.2017**
(21) Anmeldenummer: 06708775.9
(22) Anmeldetag: 15.03.2006
(51) Int. Cl.: A47B 88/467

(54) **DÄMPFUNGSEINRICHTUNG FÜR BEWEGBARE MÖBELTEILE**
DAMPING DEVICE FOR MOVABLE FURNITURE PARTS
DISPOSITIF D'AMORTISSEMENT POUR PARTIES DE MEUBLE MOBILES

(30) Priorität: 28.04.2005 DE 202005006931 U
(43) Veröffentlichungstag der Anmeldung: 09.01.2008
(73) Patentinhaber: Hettich-Heinze GmbH & Co. KG, 32139 Spenge (DE)
(72) Erfinder: NUTTELMANN, Frank, 32312 Lübbecke (DE); KARRASCH, Thorsten, 32257 Bünde (DE); AMON, Michael, 32469 Petershagen (DE)
(74) Vertreter: Dantz, Jan Henning
(86) Internationale Anmeldenummer: PCT/EP2006/060748
(87) Internationale Veröffentlichungsnummer: WO 2006/114352

(56) Entgegenhaltungen:
- EP-A2- 1 120 066
- US-A- 5 125 283
- US-A1- 2003 087 731

## Beschreibung

Die vorliegende Erfindung betrifft ein Möbel mit einem bewegbaren Möbelteil und einer Dämpfungseinrichtung für das bewegbare Möbelteil nach dem Oberbegriff des Anspruches 1.

Aus der EP 1 120 066 ist eine Schließ- und/oder Einzugsvorrichtung für bewegbare Möbelteile bekannt, bei dem ein durch eine Feder vorgespannter Schlitten die Schließbewegung des beweglichen Möbelteils unterstützt, wobei die Bewegung durch einen Fluiddämpfer gebremst ist. Dadurch kann der Schließvorgang mit geringen Schließgeräuschen und einer hohen Lebensdauer der Schließ- und Einzugsvorrichtung durchgeführt werden. Bei einem solchen Fluiddämpfer wird meist ein Drehkolben eingesetzt, der in eine Dämpfungsflüssigkeit eingetaucht ist. Auch eine Ausbildung als Klappkolben ist möglich. Nachteilig bei solchen Fluiddämpfern ist, dass diese temperaturabhängig sind, sodass eine Auslegung nur für bestimmte Temperaturen erfolgen kann und bei abweichenden Temperaturen die Dämpfung zu leicht oder zu schwer eingestellt ist. Auch bei häufiger Benutzung des Fluiddämpfers hintereinander kann sich die Dämpfungsflüssigkeit erwärmen, wodurch sich die Betriebseigenschaften nachteilig ändern. Auch bei schneller Bewegung kann es zu dem Problem kommen, dass der Flüssigkeitsfilm abreißt.

Ferner ist aus der DE 203 08 218 eine Schließ- und Dämpfungsvorrichtung für bewegbare Möbelteile bekannt, bei der eine Einzugshilfe für den Schließvorgang vorgesehen ist. Um die Bewegung beim Schließvorgang zu bremsen, ist ein Rotationsdämpfer vorgesehen, der eine Zahnscheibe und eine Bremsscheibe aufweist, die fluidbeaufschlagt sind. Auch bei diesem Element basiert die Bremswirkung auf einem Fluid, weshalb die oben erwähnten Nachteile auftreten.

Die US 5,125,283 offenbart einen Geschwindigkeitsregler zur Erzeugung von einstellbaren Bremskräften.

Es ist daher Aufgabe der vorliegenden Erfindung ein Möbel mit einer Dämpfungseinrichtung für ein bewegbares Möbelteil zu schaffen, die einfach aufgebaut ist und weitgehend temperaturunabhängig eine entsprechende Dämpfung für bewegbare Möbelteile bereitstellt.

Diese Aufgabe wird mit einem Möbel mit den Merkmalen des Anspruches 1 gelöst.

Erfindungsgemäß ist der Dämpfer als Wirbelstrombremse ausgebildet, sodass die Bremswirkung weitgehend unabhängig von Temperatureinflüssen ist. Die Wirbelstrombremse kann zudem kompakt ausgebildet sein, damit diese bei geringer Baugröße an entsprechenden Möbeln montierbar ist. Dadurch lässt sich eine entsprechende Dämpfung der Bewegung von Möbelteilen erreichen.

Gemäß der Erfindung ist zwischen dem Dämpfer und dem Mitnehmer ein Getriebe vorgesehen. Die Wirbelstrombremse erfordert meist eine höhere Rotationsgeschwindigkeit, sodass über eine entsprechende Übersetzung des Getriebes hohe Drehgeschwindigkeiten an der Wirbelstrombremse bei einer langsameren Bewegung des Mitnehmers und des Möbelteiles erreicht werden. Die Wirbelstrombremse kann dabei eine drehbare Scheibe aufweisen, die über ein mit dem Getriebe gekoppeltes Zahnrad antreibbar ist.

Gemäß einer weiteren Ausgestaltung der Erfindung ist das Getriebe mit einem Freilauf versehen und die Bewegung des Mitnehmers wird nur in eine Richtung gebremst. In Öffnungsrichtung wird nicht gebremst, so dass das Öffnen erleichtert wird. Weiterhin ist es möglich, dass bei kleinen Öffnungsstellungen ebenfalls nicht gebremst wird. Dadurch ist es möglich, bei nur kleinen Öffnungsstellungen des Möbelteils eine Bremsung zu vermeiden, da diese als störend empfunden werden könnte. In einem Bereich mit geringfügiger Öffnung kann beispielsweise ein Federelement dafür sorgen, dass das Möbelteil in die geschlossene Stellung bewegt wird, wobei eine Bremsung für kleine Bewegungen nicht notwendig ist.

Der Freilauf kann ein verschiebbares Zahnrad aufweisen, das von einer Position in Eingriff mit einem benachbarten Zahnrad in eine Position außer Eingriff mit dem benachbarten Zahnrad bewegbar ist. Dabei kann das Zahnrad des Freilaufs über eine Feder in Eingriff mit dem benachbarten Zahnrad bewegbar sein, wobei die Feder über den Mitnehmer betätigbar ist.

Gemäß einer weiteren Ausgestaltung der Erfindung ist der Mitnehmer mit einer Zahnstange gekoppelt, mittels der das Zahnrad des Freilaufes angetrieben ist. Dadurch kann auf einfache Weise eine lineare Bewegung in eine Rotationsbewegung umgesetzt werden.

Der Mitnehmer ist vorzugsweise von einer Ausgangsposition, in der das Möbelteil geschlossen ist, in eine Endposition, in der das Möbelteil teilweise geöffnet ist, bewegbar, wobei der Mitnehmer in der Endposition verrastbar sein kann. Der Mitnehmer kann sich dabei nur über einen Teil der Wegstrecke des Möbelteiles bewegen lassen, sodass das Möbelteil nach der Endposition frei bewegbar ist.

Gemäß einer bevorzugten Ausgestaltung der Erfindung ist der Mitnehmer über mindestens eine Feder in die Ausgangsposition vorgespannt, sodass die Schließbewegung des Möbelteils durch die Feder und den Dämpfer geführt ist. Die Feder ist für eine kompakte Bauweise an dem zur Ausgangsposition entfernt liegenden Ende eines mit dem Mitnehmer gekoppelten Adapters festgelegt. Dabei kann der Bauraum eines Gehäuses für die Länge der Feder optimal genutzt werden.

Die Dämpfungseinrichtung kann über den entlang einer Führungsschiene bewegbaren Mitnehmer betätigbar sein, wobei als Möbelteil eine verschiebbare Schrankwand, ein Schubelement oder andere bewegbare Bauteile, wie Schranktüren etc. eingesetzt werden können.

Die Wirbelstrombremse umfasst eine scheibenförmige Aufnahme für Permanentmagneten unterschiedlicher Polung, eine drehbare Scheibe aus einem elektrisch leitfähigen, unmagnetischen Metall und zwei Gehäuseschalen aus einem magnetisch leitfähigen Metall, wobei an der Aufnahme eine Vielzahl von Permanentmagneten fixierbar sind und über die Anzahl der Permanentmagneten und deren Magnetfeld die Bremskraft der Wirbelstrombremse einstellbar ist. Denn der Einsatz der Wirbelstrombremse im Möbelbereich erfordert eine Anpassung der Bremskraft, da unterschiedlich schwere Möbelteile gebremst werden müssen, sodass über die Anzahl der Permanentmagneten eine einfache Möglichkeit vorhanden ist, die Bremskraft der Wirbelstrombremse einzustellen. Ferner ist die Wirbelstrombremse einfach und kompakt aufgebaut und kann leicht an einem Dämpfungselement montiert werden.

Vorzugsweise ist die Aufnahme der Wirbelstrombremse aus Kunststoff hergestellt und mit Öffnungen versehen, um die Permanentmagnete darin hinzufügen. Dann lassen sich die Permanentmagnete einfach an der Wirbelstrombremse montieren und demontieren. Vorzugsweise sind vier, sechs oder acht Permanentmagnete unterschiedlicher Polung vorgesehen, damit ein ausreichendes Magnetfeld erzeugt werden kann.

Die Erfindung wird nachfolgend anhand eines Ausführungsbeispieles mit Bezug auf die beigefügten Zeichnungen näher erläutert. Es zeigen:

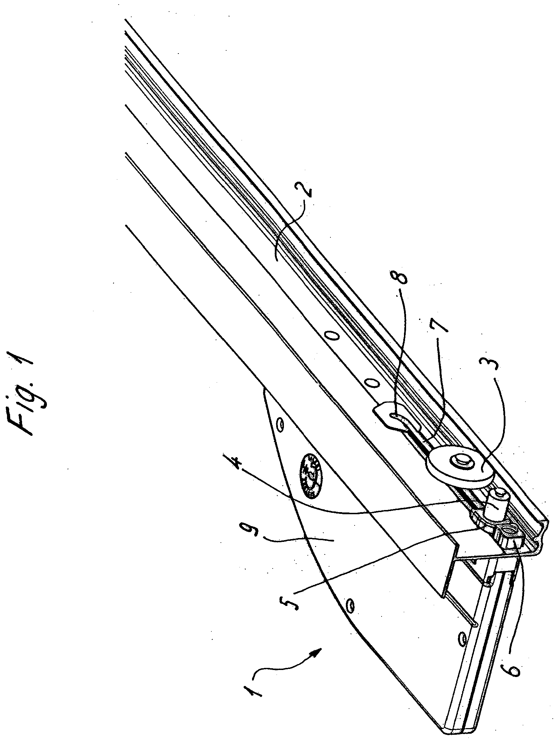

- Figur 1: eine perspektivische Ansicht eines Ausführungsbeispieles einer erfindungsgemäßen Dämpfungseinrichtung;
- Figur 2: zwei Ansichten der Dämpfungseinrichtung der Figur 1 in einer Ausgangsstellung;
- Figur 3: eine Ansicht der Dämpfungseinrichtung beim Öffnen;
- Figur 4: zwei Ansichten der Dämpfungseinrichtung kurz vor Erreichen der Endstellung;
- Figur 5: zwei Ansichten der Dämpfungseinrichtung bei Überschreiten der Endstellung;
- Figur 6: zwei Ansichten der Dämpfungseinrichtung in Endstellung;
- Figur 7: zwei Ansichten der Dämpfungseinrichtung beim Zurückbewegen des Möbelteils;
- Figur 8: eine Explosionsdarstellung der Dämpfungseinrichtung, und
- Figur 9: eine Explosionsdarstellung der Wirbelstrombremse.

Eine Dämpfungseinrichtung 1 umfasst ein Gehäuse 9, in dem bewegbare Bauteile angeordnet sind. Das Gehäuse 9 ist an einer Führungsschiene 2 montiert, an der eine Rolle 3 geführt ist, die mit einem bewegbaren Möbelteil, wie einer Schrankwand, einer Schublade oder dergleichen gekoppelt ist. Die Rolle 3 ist über ein nicht dargestelltes Kopplungselement mit einem Zapfen 4 verbunden, sodass Rolle 3 und Zapfen 4 durch das Möbelteil gemeinsam bewegt werden. Der Zapfen 4 ist in einem Mitnehmer 5 aufgenommen, der in einer Ausgangsposition an einem Anschlag 6 anliegt. Der Mitnehmer 5 ist entlang einer schlitzförmigen Kulissenführung 7 bewegbar, deren Ende 8 gekrümmt ausgebildet ist.

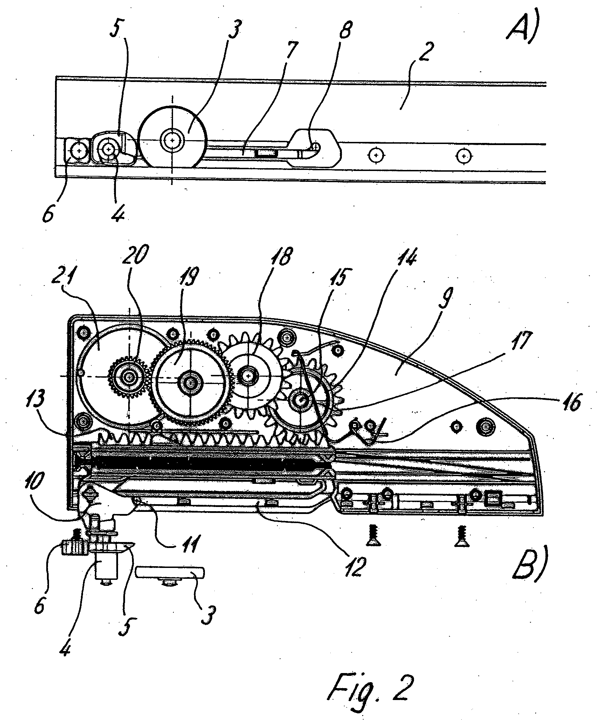

In den Figuren 2A und 2B ist die Ausgangsstellung dargestellt, bei der der Mitnehmer 5 an dem Anschlag 6 anliegt. Ein Adapter 10 ist mit dem Mitnehmer 5 verbunden, wobei der Adapter 10 über einen Stift 11 in einer Kulissenführung 12 mit einem gekrümmten Ende 80 im Gehäuse 9 geführt ist, die senkrecht zur Kulissenführung 7 angeordnet ist. Der Adapter 10 ist ferner mit einer Zahnstange 13 gekoppelt, die mit einem Zahnrad 14 eines Freilaufes kämmt. Das Zahnrad 14 ist mit einem mit einem gestuften Absatz versehenen Lagerzapfen 15 versehen, der an einem Schenkel 17 einer Feder 16 anliegt. Der Lagerzapfen 15 kann durch den Schenkel 17 der Feder 16 gegen einen kleineren Zahnkranz des Zahnrades 18 gedrückt werden, wobei hierfür die Achse des Zahnrades 14 verschieblich gelagert ist. Das Zahnrad 18 kämmt mit seinem größeren Zahnkranz mit einem kleineren Zahnkranz des Zahnrades 19. Der größere Zahnkranz des Zahnrades 19 treibt wiederum ein Zahnrad 20 an, das eine Wirbelstrombremse 21 antreibt. Die Zahnräder 18, 19 und 20 bilden eine Art Getriebe, mittels der eine Bewegung der Zahnstange 13 zu der Wirbelstrombremse 21 übertragen wird.

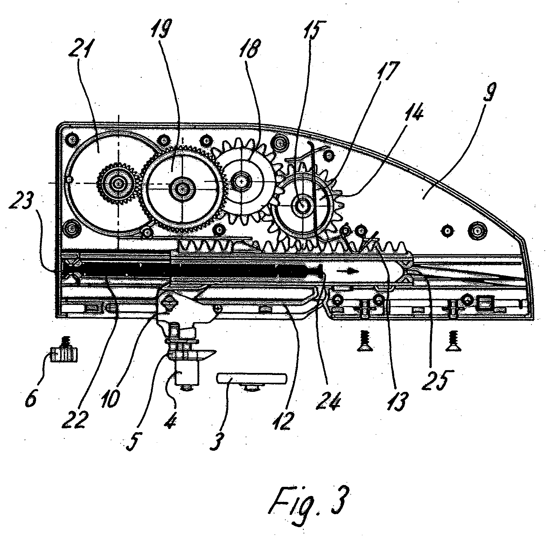

In Figur 3 ist der Beginn einer Bewegung des Möbelteiles und der Dämpfungseinrichtung dargestellt. Durch die Bewegung entfernt sich die Rolle 3 mit dem Zapfen 4 von dem Anschlag 6, wobei der Adapter 10 in der Kulissenführung 12 geführt ist. Durch die Bewegung des Adapters 10 bewegt sich auch die Zahnstange 13 gegen die Kraft einer Feder 22, die mit einem ersten Ende 23 endseitig an dem Gehäuse 9 festgelegt ist. An dem gegenüberliegenden Ende der Feder 22 ist ein Endabschnitt 24 mit einer Befestigung 25 gekoppelt, wobei die Befestigung 25 an dem, dem Ende 23 abgewandten Ende der Zahnstange 13 liegt. Die Feder 22 wird durch die Bewegung des Adapters 10 und der Zahnstange 13 gespannt, was in den einzelnen Figuren teilweise nur schematisch gezeigt ist. Die Zahnstange 13 drückt das Zahnrad 14 dabei in eine Richtung nach rechts in Figur 3, gegen den Schenkel 17 der Feder 16, wobei aufgrund der verschiebbaren Führung des Zahnrades 14 dieses außer Eingriff mit dem benachbarten Zahnrad 18 bewegt wird. Dadurch bleibt die Wirbelstrombremse 21 außer Eingriff und die Bewegung des Möbelteils kann ohne Dämpfung erfolgen.

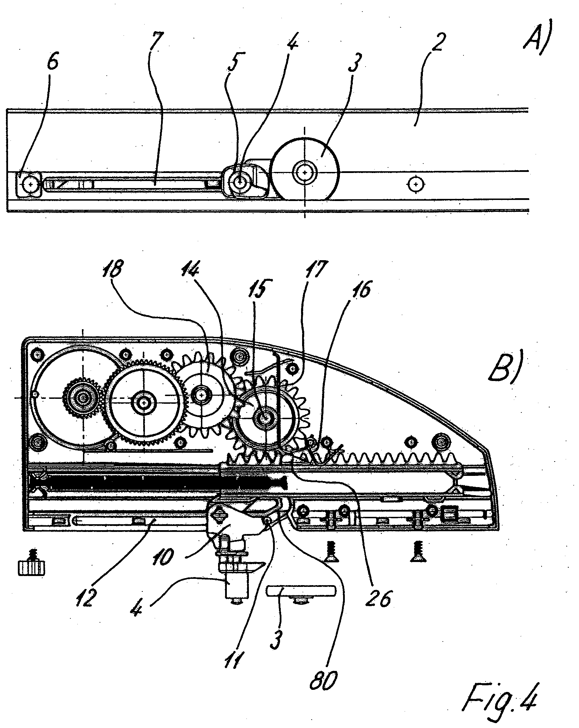

In Figuren 4A und 4B ist eine Position der Dämpfungseinrichtung kurz vor einer Endposition gezeigt. Der Adapter 10 ist mit dem Stift 11 an dem gekrümmten Ende 80 der Kulissenführung 12 angelangt, sodass bei einer weiteren Bewegung der Adapter 10 verschwenkt würde. Gleichermaßen ist der Mitnehmer 5 kurz vor dem Ende der Kulissenführung 7 angelangt, sodass bei einer weiteren Bewegung der Mitnehmer 5 verschwenkt würde, um den Zapfen 4 freizugeben.

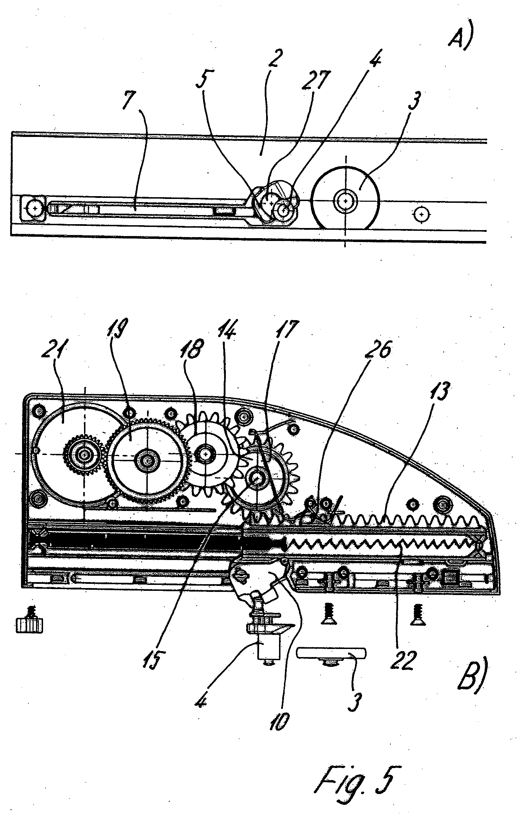

In den Figuren 5A und 5B ist der Moment der Freigabe des Zapfens 4gezeigt, sodass die Kopplung der Dämpfungsvorrichtung mit dem Möbelteil aufgehoben wird. Der Zapfen 4 bewegt sich aus einer Aufnahme 27 an dem Mitnehmer 5 heraus, wobei der Mitnehmer 5 durch die Kulissenführung 7 verschwenkt wurde. Auch der Adapter 10 wurde durch die Kulissenführung 12 verschwenkt, wobei der Adapter 10 im gekrümmten Ende 80 der Kulissenführung als Endposition verrastet ist. In der Endposition drückt ein an der Zahnstange 13 ausgebildeter Vorsprung 26 gegen die Feder 16, sodass diese mit ihrem Schenkel 17 gegen den Absatz des Lagerzapfens 15 an dem Zahnrad 14 drückt. Das Zahnrad 14 bewegt sich dadurch zu dem benachbarten Zahnrad 18 hin und gelangt in Eingriff mit dort ausgebildeten Zähnen. Nun ist das Zahnrad 14 des Freilaufs mit der Wirbelstrombremse 21 über das Getriebe 18, 19 gekoppelt. Die nur schematisch gezeigte Feder 22 befindet sich in der Endposition und drückt die Zahnstange 13 zurück in die Ausgangsposition.

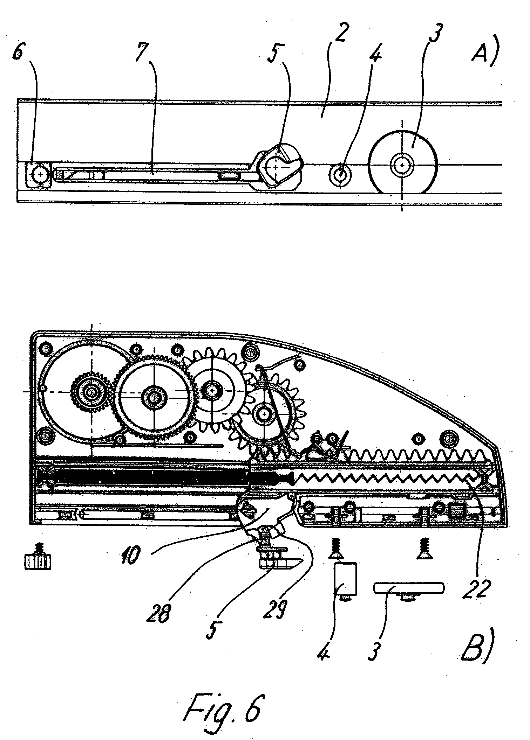

In den Figuren 6A und 6B ist eine Position dargestellt, in der das Möbelteil frei beabstandet von der Dämpfungseinrichtung bewegbar ist. Der Zapfen 4 ist nicht mehr an dem Mitnehmer 5 gehalten. In dieser Position ist der Adapter 10 in der Endposition verrastet und die Dämpfungseinrichtung wartet auf eine Schließbewegung des Möbelteils, um aktiviert zu werden.

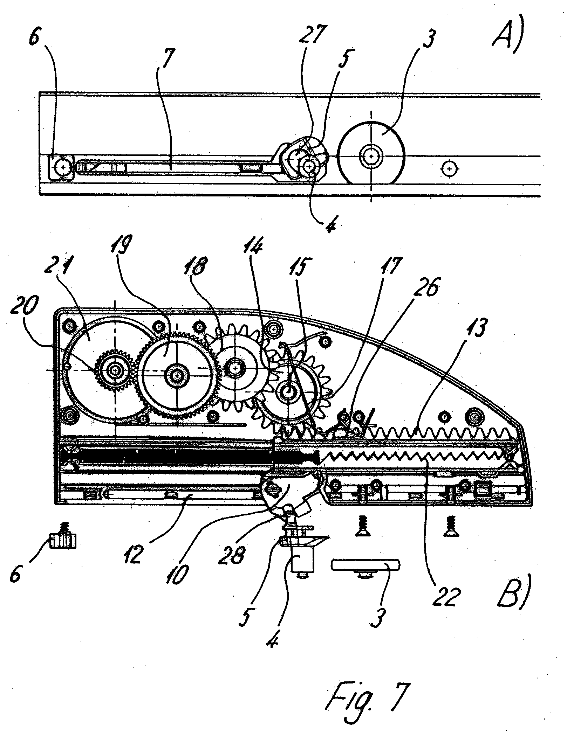

In den Figuren 7A und 7B ist der Beginn der Schließbewegung dargestellt. Der Zapfen 4 bewegt sich in die Aufnahme 27 an dem Mitnehmer 5 hinein, wodurch der Mitnehmer 5 nach unten verschwenkt wird und in der Kulissenführung 7 in die Ausgangsposition zu dem Anschlag 6 hin bewegbar ist. Ferner wird auch der Adapter 10 durch den Mitnehmer 5 verschwenkt, damit dann der Adapter 10 in der Kulissenführung 12 ebenfalls in die Ausgangsposition bewegbar ist.

Die Bewegung des Adapters 10 und des Mitnehmers 5 wird durch die Feder 22 unterstützt, die die Zahnstange 13 ebenfalls in die Ausgangsposition bewegt. Durch die Zahnstange 13 wird das Zahnrad 14 des Freilaufes gegen das benachbarte Zahnrad 18 gedrückt, sodass nun keine Feder 16 mehr erforderlich ist, um das Zahnrad 14 in Eingriff zu halten. Denn die Feder 22 und die Zahnstange 13 bewirken schon eine entsprechende Mechanische Kopplung.

Durch die Bewegung des Zahnrades 14 werden die weiteren Zahnräder 18, 19 und 20 angetrieben, wobei aufgrund der Übersetzung das Zahnrad 20 mit hoher Drehgeschwindigkeit bewegt wird. Dadurch wird eine schnelle Rotationsbewegung auf die Wirbelstrombremse 21 übertragen, die dann ihre Dämpfungswirkung entfalten kann. Nach dem Schließvorgang befindet sich der Mitnehmer 5 wieder in der Ausgangsposition, in der er an dem Anschlag 6 anliegt.

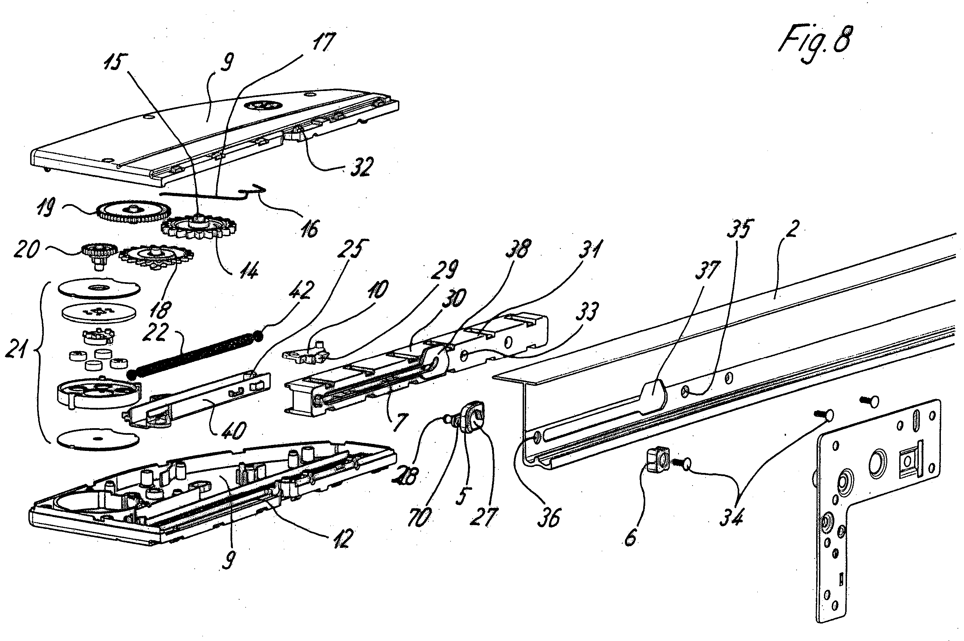

In Figur 8 ist eine Explosionsdarstellung der Dämpfungseinrichtung dargestellt. Der Mitnehmer 5 umfasst eine Aufnahme 27 für den Zapfen 4, wobei auf der gegenüberliegenden Seite ein Stift 28 in einer Aufnahme 29 des Adapters 10 gehalten ist. Der Mitnehmer 5 ist dabei mit einem verjüngten Halsabschnitt 70 in der Kulissenführung 7 geführt, die an einem Gehäuseboden 30 ausgebildet ist. Der Gehäuseboden 30 ist mit Schlitzen 31 versehen, die mit entsprechenden Rastnasen 32 an einer Seitenwand des Gehäuses 9 in Eingriff bringbar sind. Ferner sind im Gehäuseboden 30 mehrere Öffnungen 33 vorgesehen, damit dieser an der Führungsschiene 2 verschraubt werden kann. Hierfür sind an der Führungsschiene 2 mehrere Öffnungen 35 und 36 vorgesehen, in die Schrauben 34 eingedreht werden können.

Über eine endseitige Öffnung 36 wird auch der Anschlag 6 über eine Schraube 34 fixiert.

Die Führungsschiene 2 weist ferner eine Aussparung 37 auf, die die Form einer Platte 38 besitzt, in der die Kulissenführung 7 ausgebildet ist. Der Gehäuseboden 30 kann somit formschlüssig mit der Platte 38 in die Aussparung 37 eingefügt werden.

Die Zahnstange 13 ist an einer Leiste 40 ausgebildet, in der die Feder 22 eingefügt ist. Die Feder 22 greift dabei mit einem Kopf 42 an einer Befestigung 25 ein, sodass die Bewegung der Leiste 40 die Feder 22 spannt bzw. entspannt.

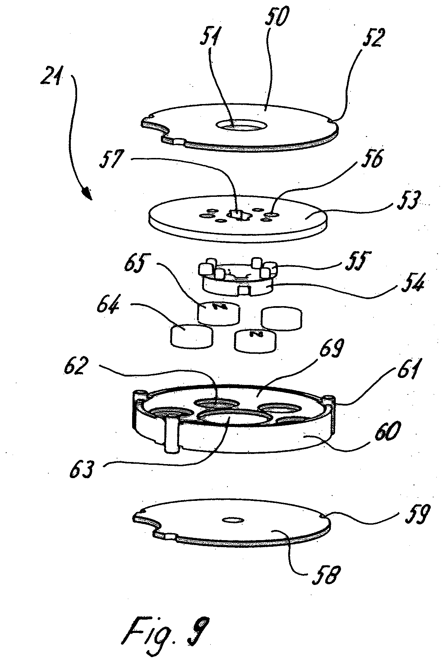

In Figur 9 ist die Wirbelstrombremse 21 im Detail dargestellt. Die Wirbelstrombremse umfasst eine obere Gehäuseschale 50 sowie eine untere Gehäuseschale 58, die aus einem magnetisch leitenden Metall, beispielsweise aus Weicheisenplatten gebildet sind, beispielsweise aus Eisenplatten. In der oberen Gehäuseschale 50 ist eine mittige Öffnung 51 vorgesehen, durch die eine Achse des Zahnrades 20 durchgeführt ist.

Das Zahnrad 20 ist dabei mit der Achse mit einer Scheibe 53 aus elektrisch leitendem, unmagnetischem Metall, beispielsweise Aluminium, Messing oder Kupfer gekoppelt, wobei in der Scheibe 53 eine mittige Aufnahme 57 vorgesehen ist, die vom Kreisquerschnitt abweicht und drehfest mit dem Zahnrad 20 koppelbar ist.

Die Scheibe 53 weist ferner noch Öffnungen 56 auf, die mit einem Halter 54 verbunden werden können, an dem entsprechende Zapfen 55 ausgebildet sind.

Unterhalb der Scheibe 53 ist eine Aufnahme 60 aus Kunststoff vorgesehen, die einen kreisförmigen Seitenrand aufweist, an der in Abständen Zapfen 61 ausgebildet sind. Diese Zapfen 61 greifen in entsprechende Aussparungen 52 und 59, die an der oberen Gehäuseschale 50 und der unteren Gehäuseschale 58 ausgebildet sind. Dadurch ist die Aufnahme 60 drehfest mit den Gehäuseschalen 50 und 58 gekoppelt, die von der Aufnahme 60 auf einem definierten Abstand gehalten werden, was den Luftspalt sicherstellt, in dem sich die Scheibe 53 dreht.

In der Aufnahme ist eine scheibenförmige Platte 69 vorgesehen, in der in regelmäßigen Winkelabständen Öffnungen 62 ausgeformt sind. Die Öffnungen 62 sind ringförmig angeordnet um eine mittige Aussparung 63, in die das Lager des Halters 54 einfügbar ist. In die scheibenförmige Platte 69 sind Permanentmagneten 64 und 65 einfügbar, wobei abwechselnd ein Permanentmagnet mit südlicher Polung neben einem Permanentmagnet 65 mit nördlicher Polung eingesetzt wird, wobei identische Permamentmagnete 64 und 65 nur unterschiedliche Montagerichtung eingebaut werden können. Durch die Permanentmagneten 64 und 65 wird ein Magnetfeld erzeugt, das durch die Gehäuseschalen 50 und 58 verläuft, wobei durch eine schnelle Drehung der Scheibe 53 infolge des Magnetfeldes und den dadurch in der Scheibe 53 induzierten Wirbelströmen gebremst wird.

Für eine einfache Herstellung der Wirbelstrombremse 21 ist es auch möglich, die Scheibe 53 direkt an das Zahnrad 20 anzuspritzen.

Bei der Wirbelstrombremse 21 kann die Bremskraft durch die Anzahl der Permanentmagnete 64 und 65 eingestellt werden. Für große Möbelteile müssen mehr Permantentmagnete 64 und 65 als für kleine Möbelteile eingesetzt werden. Dadurch kann der Benutzer variabel das Dämpfungselement einstellen.

In dem dargestellten Ausführungsbeispiel weist die Dämpfungseinrichtung eine oder mehrere Federn 22 für einen Selbsteinzug auf. Es ist natürlich möglich, das Dämpfungselement auch ohne solche Federn 22 für einen Selbsteinzug auszubilden. In diesem Fall arbeitet das Dämpfungselement als reine Bremse ohne Selbsteinzugsfunktion, diese Selbsteinzugsfunktion kann bei Bedarf auch an anderer Stelle des beweglichen Möbelteiles erzeugt werden.

Ferner ist es möglich, auf den Freilauf zu verzichten. Dann würde die Wirbelstrombremse 21 sowohl beim Öffnen als auch beim Schließen eine Bremswirkung entfalten.

Eine Dämpfungseinrichtung kann nach der Erfindung auch unterschiedliche Mechaniken für die Bewegung eines Mitnehmers, eines Adapters, oder der mechanischen Kopplung über Zahnstange und Zahnräder aufweisen. Hierbei sind viele mechanische Lösungen denkbar, die auch im Rahmen der vorliegenden Erfindung einsetzbar sind.

Die erfindungsgemäße Dämpfungseinrichtung ist sowohl vertikal als auch horizontal einbaubar. Denn durch die Wirbelstrombremse 21 hat die Schwerkraft keinen Einfluss auf die Bremswirkung. Insofern kann die Dämpfungseinrichtung auch gut nachgerüstet werden.

Die gezeigte Dämpfungseinrichtung weist eine Führungsschiene 2 auf. Es ist natürlich auch möglich, einen Aktivator unmittelbar an einem Möbelstück zu befestigen und auf die Führungsschiene 2 und die dazwischen geschalteten Bauteile 3 bis 8 zu verzichten. Dann wird der Adapter 10 als Mitnehmer im Sinne dieser Anmeldung verwendet, der unmittelbar mit dem Aktivator gekoppelt werden kann.

## Patentansprüche

1. Möbel mit einem bewegbaren Möbelteil und einer Dämpfungseinrichtung für das bewegbare Möbelteil, wobei die Dämpfungseinrichtung einen Mitnehmer (5), der mit einem bewegbaren Möbelteil koppelbar ist und mit einen Dämpfer (21), mittels dem eine Bewegung des Mitnehmers (5) zumindest in eine Richtung gebremst wird, wobei der Mitnehmer (5) von einer Ausgangsposition, in der das Möbelteil geschlossen ist, in eine Endposition, in der das Möbelteil teilweise geöffnet ist, bewegbar ist, **dadurch gekennzeichnet, dass** der Dämpfer (21) als Wirbelstrombremse ausgebildet ist und zwischen dem Dämpfer (21) und dem Mitnehmer (5) ein Getriebe (14, 18, 19) zur Erzeugung hoher Drehgeschwindigkeiten an der Wirbelstrombremse vorgesehen ist.

2. Möbel nach Anspruch 1, **dadurch gekennzeichnet, dass** die Wirbelstrombremse (21) eine drehbare Scheibe (53) aufweist, die über ein mit dem Getriebe (14, 18,19) gekoppeltes Zahnrad (20) angetrieben ist.

3. Möbel nach Anspruch 1 oder 2, **dadurch gekennzeichnet, dass** das Getriebe (14, 18, 19) mit einem Freilauf versehen ist und die Bewegung des Mitnehmers (5) nur in eine Richtung gebremst wird.

4. Möbel nach Anspruch 3, **dadurch gekennzeichnet, dass** der Freilauf ein verschiebbares Zahnrad (14) aufweist, das von einer Position in Eingriff mit einem benachbarten Zahnrad (18) in eine Position außer Eingriff mit dem benachbarten Zahnrad (18) bewegbar ist.

5. Möbel nach Anspruch 3 oder 4, **dadurch gekennzeichnet, dass** das Zahnrad (14) des Freilaufs über eine Feder (16) in Eingriff mit einer benachbarten Zahnrad (18) bewegbar ist und die Feder (16) über den Mitnehmer (5) betätigbar ist.

6. Möbel nach einem der vorhergehenden Ansprüche, **dadurch gekennzeichnet, dass** der Mitnehmer (5) mit einer Zahnstange (13) gekoppelt ist, mittels der das Zahnrad (14) des Freilaufes angetrieben ist.

7. Möbel nach einem der Ansprüche 1 bis 6, **dadurch gekennzeichnet, dass** der Mitnehmer (5) linear bewegbar ist und in der Endposition verrastbar ist.

8. Möbel nach einem der vorhergehenden Ansprüche, **dadurch gekennzeichnet, dass** der Mitnehmer (5) über mindestens eine Feder (23) in die Ausgangsposition vorgespannt ist.

9. Möbel nach Anspruch 8, **dadurch gekennzeichnet, dass** die Feder (23) an dem zur Ausgangsposition entfernt liegenden Ende eines mit dem Mitnehmer (5) gekoppelten Adapters festgelegt ist.

10. Möbel nach einem der vorhergehenden Ansprüche, **dadurch gekennzeichnet, dass** das Möbelteil zwischen der Ausgangsposition und der Endposition mit dem Mitnehmer (5) gekoppelt ist und über die Endposition hinaus bewegbar ist.

11. Möbel nach einem der vorhergehenden Ansprüche, **dadurch gekennzeichnet, dass** der Mitnehmer (5) entlang einer Aussparung in einer Führungsschiene (2) geführt ist und das Möbelteil als verschiebbare Schrankwand, als Schubelement oder dergleichen ausgebildet ist.

12. Möbel nach einem der vorhergehenden Ansprüche, **dadurch gekennzeichnet, dass** die Wirbelstrombremse (21) eine scheibenförmige Aufnahme (60) für Permanentmagneten (64, 65) unterschiedlicher Polung, eine drehbare Scheibe (53) aus einem leitfähigen Metall und zwei Gehäuseschalen (50, 58) aus einem leitfähigen Metall umfasst, wobei an der Aufnahme (60) eine Vielzahl von Permanentmagneten (64, 65) fixierbar sind und über die Anzahl der Permanentmagneten (64, 65) und deren Magnetfeld die Bremskraft der Wirbelstrombremse einstellbar ist.

13. Möbel nach Anspruch 12, **dadurch gekennzeichnet, dass** die Aufnahme (16) aus Kunststoff mit Öffnungen (62) zum Einfügen der Permanentmagneten (64, 65) ausgebildet ist.

14. Möbel nach Anspruch 12 oder 13, **dadurch gekennzeichnet, dass** an der Aufnahme (60) vier, sechs oder acht Permanentmagneten (64, 65) montierbar sind.

## Claims

1. A furniture comprising a moveable furniture part and a damping device for the moveable furniture part, whereby the damping device comprises a driver (5), which can be coupled to a moveable furniture part, and a damper (21), by means of which a movement of the driver (5) at least in one direction is braked and the driver (5) is moveable from an initial position, in which the furniture part is closed, into an end position, in which the furniture part is partially opened, **characterized in that** the damper (21) is embodied as an eddy-current brake and a gearing (14, 18, 19) is provided between the damper (21) and the driver (5) so as to achieve high rotational speed.

2. The furniture as claimed in claim 1, **characterized in that** the eddy-current brake (21) has a rotatable disk (53) which is driven by means of a gearwheel (20) which is coupled to the gearing (14, 18, 19).

3. The furniture as claimed in claim 1 or 2, **characterized in that** the gearing (14, 18, 19) is provided with a freewheel and the movement of the driver (5) is braked only in one direction.

4. The furniture as claimed in claim 3, **characterized in that** the freewheel has a moveable gearwheel (14) which can be moved from a position in engagement with an adjacent gearwheel (18) into a position out of engagement with the adjacent gearwheel (18).

5. The furniture as claimed in claim 3 or 4, **characterized in that** the gearwheel (14) of the freewheel can be moved into engagement with an adjacent gearwheel (18) by means of a spring (16), and the spring (16) can be actuated by means of the driver (6).

6. The furniture as claimed in one of the preceding claims, **characterized in that** the driver (5) is coupled to a toothed rack (13), by means of which the gearwheel (14) of the freewheel is driven.

7. The furniture as claimed in one of claims 1 to 6, **characterized in that** the driver (5) is linearly moveable and can be latched in the end position.

8. The furniture as claimed in one of the preceding claims, **characterized in that** the driver (5) is preloaded into the initial position by means of at least one spring (23).

9. The furniture as claimed in claim 8, **characterized in that** the spring (23) is fixed to that end of an adapter, which is coupled to the driver (5), which is remote from the initial position.

10. The furniture as claimed in one of the preceding claims, **characterized in that** the furniture part is coupled to the driver (5) between the initial position and the end position and can be moved beyond the end position.

11. The furniture as claimed in one of the preceding claims, **characterized in that** the driver (5) is guided along a cutout in a guide rail (2), and the furniture part is embodied as a moveable cupboard unit, as a drawer element or the like.

12. The furniture as claimed in one of the preceding claims, **characterized in that** the eddy-current brake (21) comprises a disk-shaped receptacle (60) for permanent magnets (64, 65) of different polarity, a rotatable disk (53) composed of conductive metal, and two housing shells (50, 58) composed of conductive metal, with it being possible for a plurality of permanent magnets (64, 65) to be fixed to the receptacle (60), and for the braking force of the eddy-current brake to be set by means of the number of permanent magnets (64, 65) and their magnetic field.

13. The furniture as claimed in claim 12, **characterized in that** the receptacle (16) is formed from plastic with openings (62) for inserting the permanent magnets (64, 65).

14. The furniture as claimed in claim 12 or 13, **characterized in that** four, six or eight permanent magnets (64, 65) can be mounted on the receptacle (60).

## Revendications

1. Meuble avec une partie de meuble mobile et un dispositif amortisseur pour la partie de meuble mobile, dans lequel le dispositif amortisseur comprend un entraîneur (5) qui peut être couplé à une partie de meuble mobile et avec un amortisseur (21) au moyen duquel un mouvement de l'entraîneur (5) dans au moins une direction est freiné, dans lequel l'entraîneur (5) peut être déplacé d'une position de départ dans laquelle la partie de meuble est fermée à une position de fin de course dans laquelle la partie de meuble est partiellement ouverte, **caractérisé en ce que** l'amortisseur (21) est conçu comme un frein à courants de Foucault et un engrenage (14, 18, 19) est prévu entre l'amortisseur (21) et l'entraîneur (5) pour produire des vitesses de rotation élevées au niveau du frein à courants de Foucault.

2. Meuble selon la revendication 1, **caractérisé en ce que** le frein à courants de Foucault (21) présente un disque rotatif (53) qui est entraîné par une roue dentée (20) couplée à l'engrenage (14, 18, 19).

3. Meuble selon la revendication 1 ou 2, **caractérisé en ce que** l'engrenage (14, 18, 19) est muni d'une roue libre et le mouvement de l'entraîneur (5) n'est freiné que dans une direction.

4. Meuble selon la revendication 3, **caractérisé en ce que** la roue libre présente une roue dentée déplaçable (14) qui peut être déplacée d'une position en prise avec une roue dentée voisine (18) à une position hors prise avec la roue dentée voisine (18).

5. Meuble selon la revendication 3 ou 4, **caractérisé en ce que** la roue dentée (14) de la roue libre peut être mise en prise par un ressort (16) avec une roue dentée voisine (18) et le ressort (16) peut être actionné par l'entraîneur (5).

6. Meuble selon l'une des revendications précédentes, **caractérisé en ce que** l'entraîneur (5) est couplé à une crémaillère (13) au moyen de laquelle la roue dentée (14) de la roue libre est entraînée.

7. Meuble selon l'une des revendications 1 à 6, **caractérisé en ce que** l'entraîneur (5) peut effectuer un mouvement linéaire et s'enclencher dans la position de fin de course.

8. Meuble selon l'une des revendications précédentes, **caractérisé en ce que** l'entraîneur (5) est précontraint par au moins un ressort (23) dans la position de départ.

9. Meuble selon la revendication 8, **caractérisé en ce que** le ressort (23) est fixé à l'extrémité éloignée de la position de départ d'un adaptateur couplé à l'entraîneur (5).

10. Meuble selon l'une des revendications précédentes, **caractérisé en ce que** la partie de meuble est couplée avec l'entraîneur (5) entre la position de départ et la position de fin de course et peut être déplacée au-delà de la position de fin de course.

11. Meuble selon l'une des revendications précédentes, **caractérisé en ce que** l'entraîneur (5) est guidé le long d'une découpe dans un rail de guidage (2) et la partie de meuble est réalisée comme une paroi de placard coulissante, un élément de tiroir ou similaire.

12. Meuble selon l'une des revendications précédentes, **caractérisé en ce que** le frein à courants de Foucault (21) comprend un logement en forme de disque (60) pour des aimants permanents (64, 65) de polarité différente, un disque rotatif (53) fait d'un métal conducteur et deux coques de boîtier (50,58) faites d'un métal conducteur, plusieurs aimants permanents (64, 65) pouvant être fixés sur le logement (60) et le nombre des aimants permanents (64, 65) et leur champ magnétique permettant de régler l'effort de freinage du frein à courants de Foucault.

13. Meuble selon la revendication 12, **caractérisé en ce que** le logement (16) est fait de plastique avec des ouvertures (62) pour l'insertion des aimants permanents (64, 65).

14. Meuble selon la revendication 12 ou 13, **caractérisé en ce que** quatre, six ou huit aimants permanents (64, 65) peuvent être montés sur le logement (16).
